# EUROPEAN PATENT APPLICATION

(11) **EP 4 112 380 A1**
(43) Date of publication of application: **04.01.2023**
(21) Application number: 20927524.7
(22) Date of filing: 25.03.2020
(51) Int. Cl.: B60Q 1/02, B60Q 1/04

(54) **VEHICLE LIGHTING CONTROL METHOD AND APPARATUS**

(71) Applicant: Huawei Technologies Co., Ltd., Shenzhen, Guangdong 518129, (CN)
(72) Inventor: SUI, Linlin, Shenzhen, Guangdong 518129 (CN); LI, Mingchao, Shenzhen, Guangdong 518129 (CN); XIA, Yuan, Shenzhen, Guangdong 518129 (CN); LIU, Nan, Shenzhen, Guangdong 518129 (CN)
(74) Representative: Pfenning, Meinig & Partner mbB
(86) International application number: PCT/CN2020/081013
(87) International publication number: WO 2021/189275

(57) **Abstract**

Embodiments of this application provide a vehicle lighting control method and apparatus. A roadside communications device sends a first message to a vehicle. The first message is used to prompt the vehicle to illuminate a first target, and the first target is near a travel path that the vehicle is to pass through. Before passing the first target, the vehicle adjusts the vehicle into a first lighting mode in advance based on the first message, to illuminate the first target. In this way, the vehicle can illuminate a specific target in advance, so that neither manual triggering by a driver is required nor passing the specific target is necessary before the specific target is automatically illuminated. This resolves a problem of delayed lighting in the conventional technology. Embodiments of this application are more than applicable to an illumination scenario of a visual blind area in a curve and are applicable to an illumination scenario of a roadside blind area. This greatly improves user experience and driving safety.

## Description

### TECHNICAL FIELD

This application relates to the field of connected vehicles and intelligent driving technologies, and in particular, to a vehicle lighting control method and a device.

### BACKGROUND

When a vehicle travels at night, an area having a safety risk in front of the vehicle may not be illuminated due to a limited illumination range of a vehicle lamp. The area is referred to as a visual blind area. Illuminating the area in advance can help a driver make a safer driving decision, so that driving safety is improved.

For a visual blind area in a curve, the conventional technology provides two lighting systems for a curve at night: a light source supplementing curve lighting system and an adaptive front-lighting system (adaptive front-lighting system, AFS for short). For the light source supplementing curve lighting system, a supplementary light source such as a corner lamp or a static curve low beam lamp needs to be additionally disposed on the vehicle. When determining that the vehicle is to enter the curve, the driver may turn on a corresponding supplementary light source by rotating a steering wheel, to illuminate the blind area in the curve. For the AFS, because the driver needs to rotate the steering wheel when entering the curve, the AFS may adaptively rotate a corresponding angle based on a steering lock angle of the vehicle or a trajectory of a gravity center of the vehicle, to illuminate the blind area in the curve.

However, both of the foregoing two curve lighting systems are triggered to be enabled by rotating the steering wheel after the driver autonomously determines that there is a curve in front of the vehicle. In other words, when the foregoing two curve lighting systems are enabled, the vehicle has entered the curve. However, from a perspective of driving safety of the driver, the driver may need to observe a road condition of the blind area in the curve before the vehicle enters the curve, to provide reference for a steering operation of the driver. It is clear that lighting operations of the foregoing two curve lighting systems are delayed, and neither of the foregoing two curve lighting systems is applicable to lighting of another type of visual blind area. As a result, safety of driving the vehicle is low.

### SUMMARY

Embodiments of this application provide a vehicle lighting control method and a device, to resolve a problem in the conventional technology that driving safety is low because it depends on a driver to actively trigger lighting of a visual blind area.

According to a first aspect, a vehicle lighting control method is provided and applied to a vehicle. The method includes: receiving a first message sent by a first roadside communications device, where the first message is used to prompt the vehicle to illuminate a first target, and the first target is near a travel path that the vehicle is to pass through; and
adjusting the vehicle into a first lighting mode in advance based on the first message before the vehicle passes the first target, to illuminate the first target, where the passing the first target means reaching the first target, or means that the vehicle reaches a location closest to the first target on the travel path.

The roadside communications device includes but is not limited to a base station, a roadside unit RSU, and another vehicle or communications device on a road on which the vehicle travels. The first target includes but is not limited to a curve, a construction site, a roadblock, or a blind area of regular lighting of the vehicle.

The foregoing vehicle lighting control method may be applied to the vehicle. After the first message sent by the first roadside communications device is received, before the vehicle passes the first target, the vehicle is adjusted into the first lighting mode in advance based on the first message, to illuminate the first target. In this way, the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

In a possible design, the first message includes at least one parameter, and the adjusting the vehicle into a first lighting mode in advance based on the first message before the vehicle passes the first target, to illuminate the first target includes:
determining a first turn-on moment based on the at least one parameter, where the first turn-on moment is advanced by a first timing advance relative to a moment at which the vehicle travels past the first target; and
adjusting the vehicle into the first lighting mode at the first turn-on moment.

The at least one parameter includes but is not limited to a type of a first location, a geographical location of the first location, a moving speed at the first location, or the first timing advance.

In a possible design, the first message includes at least one parameter, and the adjusting the vehicle into a first lighting mode in advance based on the first message before the vehicle passes the first target, to illuminate the first target includes:
determining a first turn-on location based on the at least one parameter; and
adjusting the vehicle into the first lighting mode when the vehicle arrives at the first turn-on location, to illuminate the first target.

The at least one parameter includes but is not limited to a type of a first location, a geographical location of the first location, a moving speed at the first location, a first timing advance, or a first distance.

In a possible design, the first message includes at least one parameter, and the adjusting the vehicle into a first lighting mode in advance based on the first message before the vehicle passes the first target, to illuminate the first target includes:
determining a first distance based on the at least one parameter; and
adjusting the vehicle into the first lighting mode when the vehicle arrives at a location that is the first distance from the first target, to illuminate the first target.

The at least one parameter includes but is not limited to a type of a first location, a geographical location of the first location, a moving speed at the first location, or a first timing advance.

In a possible design, the first message includes a first turn-on moment, and the adjusting the vehicle into a first lighting mode in advance based on the first message before the vehicle passes the first target, to illuminate the first target includes: adjusting the vehicle into the first lighting mode at the first turn-on moment.

In a possible design, the first message includes a first turn-on location, and the adjusting the vehicle into a first lighting mode in advance based on the first message before the vehicle passes the first target, to illuminate the first target includes: adjusting the vehicle into the first lighting mode when the vehicle arrives at the first turn-on location, to illuminate the first target.

In a possible design, the first message includes a first distance, and the adjusting the vehicle into a first lighting mode in advance based on the first message before the vehicle passes the first target, to illuminate the first target includes: adjusting the vehicle into the first lighting mode when the vehicle arrives at a location that is the first distance from the first target, to illuminate the first target.

In a possible design, the adjusting the vehicle into a first lighting mode includes: adjusting at least one of a type of a turned-on lamp, a quantity of turned-on lamps, projection light intensity, a projection angle, or a turn-on moment.

In a possible design, before the adjusting the vehicle into a first lighting mode in advance to illuminate the first target, the method further includes:
determining, based on the first message, that a minimum distance between the first target and a planned navigation path of the vehicle does not exceed a first threshold.

In a possible design, the method further includes:
receiving a second message sent by a second roadside communications device, where the second message is used to prompt the vehicle to illuminate a second target, and the second target is near the travel path that the vehicle is to pass through; and
adjusting the vehicle into a second lighting mode in advance based on the second message before the vehicle passes the second target, to simultaneously illuminate the first target and the second target.

In the foregoing method, the second message sent by the second roadside communications device is received, so that before passing the second target, the vehicle can adjust the vehicle into the second lighting mode to simultaneously illuminate the first target and the second target. In this way, a plurality of visual blind areas are simultaneously illuminated, and the driver can clearly observe road conditions in all areas having safety risks on a road at a same time. This further improves driving safety.

In a possible design, the first message is further used to prompt the vehicle to illuminate a second target, and the second target is near the travel path that the vehicle is to pass through.

The vehicle is adjusted into a second lighting mode in advance based on the first message before the vehicle passes the second target, to simultaneously illuminate the first target and the second target.

In the foregoing method, the first message sent by the first roadside communications device is received, where the first message is more than used to prompt the vehicle to illuminate the first target and is used to prompt the vehicle to illuminate the second target, so that before passing the second target, the vehicle can adjust the vehicle into the second lighting mode to simultaneously illuminate the first target and the second target. In this way, a plurality of visual blind areas are simultaneously illuminated, and the driver can clearly observe road conditions in all areas having safety risks on a road at a same time. This further improves driving safety.

According to a second aspect, a vehicle lighting control method is provided and applied to a roadside communications device. The method includes:
sending a first message to a vehicle, where the first message is used to prompt the vehicle to illuminate a first target, and the first target is near a travel path that the vehicle is to pass through.

The first message includes at least one of a first turn-on moment, a first timing advance, a first turn-on location, or a first distance.

The first turn-on moment is used to indicate the vehicle to adjust the vehicle into a first lighting mode at the first turn-on moment, to illuminate the first target.

The first timing advance is used to indicate the vehicle to adjust the vehicle into the first lighting mode at a moment advanced by the first timing advance relative to a moment at which the vehicle travels past the first target, to illuminate the first target.

The first turn-on location is used to indicate the vehicle to adjust the vehicle into the first lighting mode when the vehicle arrives at the first turn-on location, to illuminate the first target.

The first distance is used to indicate the vehicle to adjust the vehicle into the first lighting mode when the vehicle arrives at a location that is the first distance from the first target, to illuminate the first target.

The roadside communications device includes but is not limited to a base station, a roadside unit RSU, and another vehicle or communications device on a road on which the vehicle travels. The first target includes but is not limited to a curve, a construction site, a roadblock, or a blind area of regular lighting of the vehicle.

The vehicle lighting control method may be applied to the roadside communications device. The roadside communications device may send the first message to the vehicle. The first message includes at least one of the first turn-on moment, the first timing advance, the first turn-on location, or the first distance. After receiving the first message, the vehicle may adjust the vehicle into the first lighting mode in advance before the vehicle passes the first target, to illuminate the first target, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

In a possible design, before the sending a first message to a vehicle, the method further includes:
obtaining a first location of the vehicle at a first time point and first motion status data relative to the roadside communications device; and
determining at least one of the first turn-on moment, the first timing advance, the first turn-on location, or the first distance based on the first location and the first motion status data.

The motion status data includes but is not limited to a velocity, an acceleration, an angular velocity, or an angular acceleration.

In a possible design, before the sending a first message to a vehicle, the method further includes:
determining at least one of the first turn-on moment, the first timing advance, the first turn-on location, or the first distance based on the first target.

In a possible design, before the sending a first message to a vehicle, the method further includes:
obtaining information about a planned navigation path of the vehicle; and
determining at least one of the first turn-on moment, the first timing advance, the first turn-on location, or the first distance based on the navigation path information.

In a possible design, the first message is further used to prompt the vehicle to illuminate a second target, and the second target is near the travel path that the vehicle is to pass through.

The first message further includes at least one of a second turn-on moment, a second timing advance, a second turn-on location, or a second distance.

The second turn-on moment is used to indicate the vehicle to adjust the vehicle into a second lighting mode at the second turn-on moment, to simultaneously illuminate the first target and the second target.

The second timing advance is used to indicate the vehicle to adjust the vehicle into the second lighting mode at a moment advanced by the second timing advance relative to a moment at which the vehicle travels past the second target, to simultaneously illuminate the first target and the second target.

The second turn-on location is used to indicate the vehicle to adjust the vehicle into the second lighting mode when the vehicle arrives at the second turn-on location, to simultaneously illuminate the first target and the second target.

The second distance is used to indicate the vehicle to adjust the vehicle into the second lighting mode when the vehicle arrives at a location that is the second distance from the second target, to simultaneously illuminate the first target and the second target.

In the foregoing method, the roadside communications device sends the first message to the vehicle, where the first message is more than used to prompt the vehicle to illuminate the first target and is used to prompt the vehicle to illuminate the second target, so that before passing the second target, the vehicle can adjust the vehicle into the second lighting mode to simultaneously illuminate the first target and the second target. In this way, a plurality of visual blind areas are simultaneously illuminated, and the driver can clearly observe road conditions in all areas having safety risks on a road at a same time. This further improves driving safety.

According to a third aspect, a vehicle lighting control apparatus is provided and used in a vehicle. The apparatus includes:
a receiving module, configured to receive a first message sent by a first roadside communications device, where the first message is used to prompt the vehicle to illuminate a first target, and the first target is near a travel path that the vehicle is to pass through; and
an adjustment module, configured to adjust the vehicle into a first lighting mode in advance based on the first message before the vehicle passes the first target, to illuminate the first target.

The vehicle lighting control apparatus may be used in the vehicle. The receiving module and the adjustment module are configured in the apparatus, and the receiving module and the adjustment module perform the foregoing steps, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

In a possible design, the first message includes at least one parameter, and the adjustment module is specifically configured to:
determine a first turn-on moment based on the at least one parameter, where the first turn-on moment is advanced by a first timing advance relative to a moment at which the vehicle travels past the first target; and
adjust the vehicle into the first lighting mode at the first turn-on moment.

In a possible design, the first message includes at least one parameter, and the adjustment module is specifically configured to:
determine a first turn-on location based on the at least one parameter; and
adjust the vehicle into the first lighting mode when the vehicle arrives at the first turn-on location, to illuminate the first target.

In a possible design, the first message includes at least one parameter, and the adjustment module is specifically configured to:
determine a first distance based on the at least one parameter; and
adjust the vehicle into the first lighting mode when the vehicle arrives at a location that is the first distance from the first target, to illuminate the first target.

In a possible design, the first message includes a first turn-on moment, and the adjustment module is specifically configured to:
adjust the vehicle into the first lighting mode at the first turn-on moment.

In a possible design, the first message includes a first turn-on location, and the adjustment module is specifically configured to:
adjust the vehicle into the first lighting mode when the vehicle arrives at the first turn-on location, to illuminate the first target.

In a possible design, the first message includes a first distance, and the adjustment module is specifically configured to:
adjust the vehicle into the first lighting mode when the vehicle arrives at a location that is the first distance from the first target, to illuminate the first target.

In a possible design, the adjustment module is specifically configured to:
adjust at least one of a type of a turned-on lamp, a quantity of turned-on lamps, projection light intensity, a projection angle, or a turn-on moment.

In a possible design, the apparatus further includes:
a determining module, configured to determine, based on the first message, that a minimum distance between the first target and a planned navigation path of the vehicle does not exceed a first threshold.

In a possible design, the receiving module is further configured to receive a second message sent by a second roadside communications device, where the second message is used to prompt the vehicle to illuminate a second target, and the second target is near the travel path that the vehicle is to pass through.

The adjustment module is further configured to adjust the vehicle into a second lighting mode in advance based on the second message before the vehicle passes the second target, to simultaneously illuminate the first target and the second target.

The receiving module and the adjustment module perform the foregoing steps, so that before passing the second target, the vehicle can adjust the vehicle into the second lighting mode to simultaneously illuminate the first target and the second target. In this way, a plurality of visual blind areas are simultaneously illuminated, and the driver can clearly observe road conditions in all areas having safety risks on a road at a same time. This further improves driving safety.

In a possible design, the first message is further used to prompt the vehicle to illuminate a second target, and the second target is near the travel path that the vehicle is to pass through.

The adjustment module is further configured to adjust the vehicle into a second lighting mode in advance based on the first message before the vehicle passes the second target, to simultaneously illuminate the first target and the second target.

The adjustment module performs the foregoing step, so that before passing the second target, the vehicle can adjust the vehicle into the second lighting mode to simultaneously illuminate the first target and the second target. In this way, a plurality of visual blind areas are simultaneously illuminated, and the driver can clearly observe road conditions in all areas having safety risks on a road at a same time. This further improves driving safety.

According to a fourth aspect, a vehicle lighting control apparatus is provided and used in a roadside communications device. The apparatus includes:
a sending module, configured to send a first message to a vehicle, where the first message is used to prompt the vehicle to illuminate a first target, and the first target is near a travel path that the vehicle is to pass through.

The first message includes at least one of a first turn-on moment, a first timing advance, a first turn-on location, or a first distance.

The first turn-on moment is used to indicate the vehicle to adjust the vehicle into a first lighting mode at the first turn-on moment, to illuminate the first target.

The first timing advance is used to indicate the vehicle to adjust the vehicle into the first lighting mode at a moment advanced by the first timing advance relative to a moment at which the vehicle travels past the first target, to illuminate the first target.

The first turn-on location is used to indicate the vehicle to adjust the vehicle into the first lighting mode when the vehicle arrives at the first turn-on location, to illuminate the first target.

The first distance is used to indicate the vehicle to adjust the vehicle into the first lighting mode when the vehicle arrives at a location that is the first distance from the first target, to illuminate the first target.

The vehicle lighting control apparatus may be used in the roadside communications device. The sending module is configured in the apparatus, and the sending module performs the foregoing step, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

In a possible design, the apparatus further includes:
a first obtaining module, configured to obtain a first location of the vehicle at a first time point and first motion status data relative to the roadside communications device; and
a first determining module, configured to determine at least one of the first turn-on moment, the first timing advance, the first turn-on location, or the first distance based on the first location and the first motion status data.

In a possible design, the apparatus further includes:
a second determining module, configured to determine at least one of the first turn-on moment, the first timing advance, the first turn-on location, or the first distance based on the first target.

In a possible design, the apparatus further includes:
a second obtaining module, configured to obtain information about a planned navigation path of the vehicle; and
a third determining module, configured to determine at least one of the first turn-on moment, the first timing advance, the first turn-on location, or the first distance based on the navigation path information.

In a possible design, the first message is further used to prompt the vehicle to illuminate a second target, and the second target is near the travel path that the vehicle is to pass through.

The first message further includes at least one of a second turn-on moment, a second timing advance, a second turn-on location, or a second distance.

The second turn-on moment is used to indicate the vehicle to adjust the vehicle into a second lighting mode at the second turn-on moment, to simultaneously illuminate the first target and the second target.

The second timing advance is used to indicate the vehicle to adjust the vehicle into the second lighting mode at a moment advanced by the second timing advance relative to a moment at which the vehicle travels past the second target, to simultaneously illuminate the first target and the second target.

The second turn-on location is used to indicate the vehicle to adjust the vehicle into the second lighting mode when the vehicle arrives at the second turn-on location, to simultaneously illuminate the first target and the second target.

The second distance is used to indicate the vehicle to adjust the vehicle into the second lighting mode when the vehicle arrives at a location that is the second distance from the second target, to simultaneously illuminate the first target and the second target.

The first message sent by the sending module to the vehicle is more than used to prompt the vehicle to illuminate the first target and is used to prompt the vehicle to illuminate the second target, so that before passing the second target, the vehicle can adjust the vehicle into the second lighting mode to simultaneously illuminate the first target and the second target. In this way, a plurality of visual blind areas are simultaneously illuminated, and the driver can clearly observe road conditions in all areas having safety risks on a road at a same time. This further improves driving safety.

According to a fifth aspect, a lighting control apparatus is provided and used in a vehicle. The apparatus includes a memory and a processor.

The memory is configured to store program instructions, and the processor is configured to invoke the program instructions in the memory to perform the steps on a vehicle side in the foregoing vehicle lighting control method.

The lighting control apparatus is used in the vehicle. The memory and the processor are configured in the apparatus. The steps on the vehicle side in the vehicle lighting control method may be implemented by using the memory to store the program instructions and using the processor to invoke the program instructions, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

According to a sixth aspect, a lighting control apparatus is provided and used in a roadside communications device. The apparatus includes a memory and a processor.

The memory is configured to store program instructions, and the processor is configured to invoke the program instructions in the memory to perform the steps on a roadside communications device side in the foregoing vehicle lighting control method.

The lighting control apparatus is used in the roadside communications device. The memory and the processor are configured in the apparatus. The steps on the roadside communications device side in the vehicle lighting control method may be implemented by using the memory to store the program instructions and using the processor to invoke the program instructions, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

According to a seventh aspect, a computer-readable storage medium is provided. The computer-readable storage medium stores a computer program. When the computer program is executed, the steps on a vehicle side or a roadside communications device side in the foregoing vehicle lighting control method are implemented.

The computer-readable storage medium may be configured to store the computer program. When the computer program is executed, the steps on the vehicle side or the roadside communications device side in the foregoing vehicle lighting control method may be implemented, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

According to an eighth aspect, a computer program product is provided. When the computer program product is run on a processor, the steps on a vehicle side or a roadside communications device side in the foregoing vehicle lighting control method are implemented.

When the computer program product is run on the processor, the steps on the vehicle side or the roadside communications device side in the foregoing vehicle lighting control method may be implemented, so that the vehicle can automatically adjust a lighting mode to illuminate a visual blind area in advance. Because the foregoing method does not rely on active triggering of a driver, a problem of a delayed lighting operation in the conventional technology can be avoided. In addition, the foregoing method is more than applicable to an illumination scenario of a visual blind area in a curve and is applicable to an illumination scenario of a roadside blind area. This greatly improves driving safety.

### BRIEF DESCRIPTION OF DRAWINGS

To describe the technical solutions in embodiments of the present application or in the conventional technology more clearly, the following briefly describes the accompanying drawings for describing the embodiments or the conventional technology.
FIG. 1 is a schematic diagram of an illumination scenario of a visual blind area in a curve according to an embodiment of this application;
FIG. 2 is a schematic diagram of an illumination scenario of a roadside blind area according to an embodiment of this application;
FIG. 3 is a diagram of an architecture of a system according to an embodiment of this application;
FIG. 4 is a schematic diagram of an installation location of a communications device in the scenario shown in FIG. 1 according to an embodiment of this application;
FIG. 5 is a schematic diagram of an installation location of a communications device in the scenario shown in FIG. 2 according to an embodiment of this application;
FIG. 6 is a schematic flowchart of Embodiment 1 of a vehicle lighting control method according to an embodiment of this application;
FIG. 7 is a schematic diagram of a current location point of a vehicle and a start point of a curve in the scenario shown in FIG. 1 according to an embodiment of this application;
FIG. 8 is a schematic diagram of an effect in the scenario shown in FIG. 1 according to an embodiment of this application;
FIG. 9 is a schematic flowchart of Embodiment 2 of a vehicle lighting control method according to an embodiment of this application;
FIG. 10 is a schematic diagram of a current location point of a vehicle and a start point of a roadside blind area in the scenario shown in FIG. 2 according to an embodiment of this application;
FIG. 11 is a schematic diagram of an effect in the scenario shown in FIG. 2 according to an embodiment of this application;
FIG. 12 is a schematic diagram of an illumination scenario in which there are a plurality of roadside blind areas according to an embodiment of this application;
FIG. 13 is a schematic flowchart of Embodiment 3 of a vehicle lighting control method according to an embodiment of this application;
FIG. 14 is a schematic diagram of an effect in the scenario shown in FIG. 12 according to an embodiment of this application;
FIG. 15 is a schematic diagram of a structure of a vehicle lighting control apparatus 150 according to an embodiment of this application;
FIG. 16 is a schematic diagram of a structure of a vehicle lighting control apparatus 160 according to an embodiment of this application; and
FIG. 17 is a schematic diagram of a hardware structure 170 according to an embodiment of this application.

### DESCRIPTION OF EMBODIMENTS

To make the objectives, technical solutions, and advantages of this application clearer, the following clearly and completely describes the technical solutions in this application with reference to the accompanying drawings in this application. It is clear that the described embodiments are a part rather than all of the embodiments of this application. All other embodiments obtained by a person of ordinary skill in the art based on embodiments of this application without creative efforts shall fall within the protection scope of this application.

In this application, it should be explained that terms such as "first" and "second" are merely intended for a purpose of description, and shall not be understood as an indication or implication of relative importance. In addition, "at least one" means one or more, and "a plurality of' means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" usually represents an "or" relationship between the associated objects. At least one of the following items (pieces) or a similar expression thereof indicates any combination of these items, including a single item (piece) or any combination of a plurality of items (pieces). For example, at least one of a, b, or c may represent: a, b, c, a combination of a and b, a combination of a and c, a combination of b and c, or a combination of a, b, and c, where a, b, and c may be singular or plural.

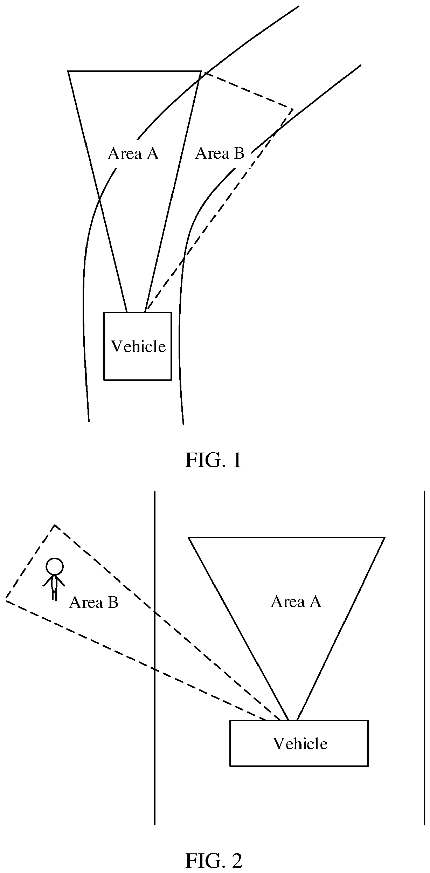

When a vehicle travels at night, an area having a safety risk in front of the vehicle may not be illuminated due to a limited illumination range of a vehicle lamp. The area is referred to as a visual blind area. As shown in FIG. 1 and FIG. 2, embodiments of this application provide two illumination scenarios of visual blind areas. FIG. 1 is a schematic diagram of an illumination scenario of a visual blind area in a curve, and FIG. 2 is a schematic diagram of an illumination scenario of a roadside blind area. In the scenario shown in FIG. 1, a road section ahead is a curve, an illumination range of a vehicle lamp of a vehicle is an area A, and an area B in the curve is a visual blind area because the area B is not within the illumination range of the vehicle lamp. However, for a driver, knowing a road condition in the area B in advance may provide important reference for a driving decision in the curve. In the scenario shown in FIG. 2, a vehicle travels on a straight road, an illumination range of a vehicle lamp of the vehicle is an area A, an area in which a pedestrian is located is an area B, and the area B is not within the illumination range of the vehicle lamp. However, for a driver, knowing a location of the pedestrian in the area B in advance is critical for implementing safe driving.

It should be noted that the foregoing two lighting scenarios are merely examples of scenarios provided for describing the solutions of this application. A person skilled in the art may properly transform the foregoing two scenarios to obtain another scenario, for example, a scenario obtained by replacing the pedestrian in the scenario shown in FIG. 2 with a construction site, a roadblock, a road warning sign, or the like. An area that has a safety risk and that is not within an illumination range of a vehicle lamp may be considered as an area B. These scenarios are not described in detail in this application.

For the scenario shown in FIG. 1, the conventional technology provides two lighting systems for a curve at night: a light source supplementing curve lighting system and an adaptive front-lighting system (adaptive front-lighting system, AFS for short). For the light source supplementing curve lighting system, a supplementary light source such as a corner lamp or a static curve low beam lamp needs to be additionally disposed on the vehicle. When determining that the vehicle is to enter the curve, the driver may turn on a corresponding supplementary light source by rotating a steering wheel, to illuminate the visual blind area in the curve. For the AFS, because the driver needs to rotate the steering wheel when entering the curve, the AFS may adaptively rotate a corresponding angle based on a steering lock angle of the vehicle or a trajectory of a gravity center of the vehicle, to illuminate the visual blind area in the curve.

However, both of the foregoing two curve lighting systems are triggered to be enabled by rotating the steering wheel after the driver autonomously determines that there is a curve in front of the vehicle. In other words, when the foregoing two curve lighting systems are enabled, the vehicle has entered the curve. However, from a perspective of driving safety of the driver, the driver may need to observe a road condition of the visual blind area in the curve before the vehicle enters the curve, to provide reference for a steering operation of the driver. It is clear that lighting operations of the foregoing two curve lighting systems are delayed, and neither of the foregoing two curve lighting systems is applicable to lighting of the roadside blind area shown in FIG. 2. As a result, safety of driving the vehicle is low.

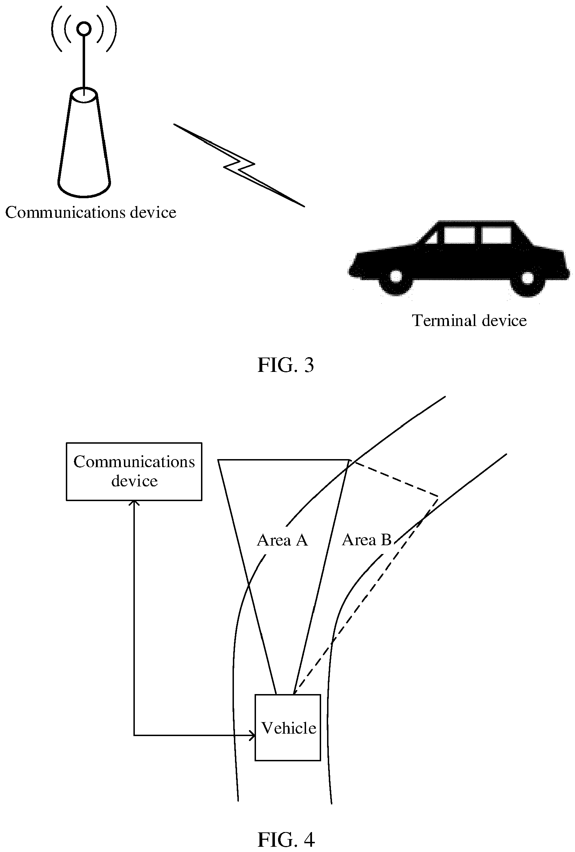

Considering the foregoing technical problems in the conventional technology, embodiments of this application provide a vehicle lighting control method. The method may be implemented based on a system architecture shown in FIG. 3. The system architecture shown in FIG. 3 includes a roadside communications device and a terminal device.

The roadside communications device includes but is not limited to a base station (Base Transceiver Station, BTS for short) in Global System for Mobile Communications (Global System for Mobile Communication, GSM for short) or Code Division Multiple Access (Code Division Multiple Access, CDMA for short), a base station (NodeB, NB for short) in Wideband Code Division Multiple Access (Wideband Code Division Multiple Access, WCDMA for short), an evolved NodeB (evolved NodeB, eNB for short) in an LTE network, an access point (access point, AP), a relay station, a base station in a 5G network or an NR, a micro base station, a mobile micro base station, a roadside unit RSU, a mobile phone, a tablet computer, a notebook computer, a smartwatch, and another device that can implement a corresponding function. The terminal device includes but is not limited to a control component in a vehicle, a lighting system in a vehicle, a mobile terminal in a vehicle, a vehicle, and another device that can implement a corresponding function. The following describes the solutions of this application by using an example in which the terminal device is a vehicle. It should be noted that a solution obtained when a step performed by the vehicle is performed by foregoing another terminal device other than the vehicle also falls within the protection scope of this application. In FIG. 3, the roadside communications device and the vehicle may be connected by using an existing wireless communications technology.

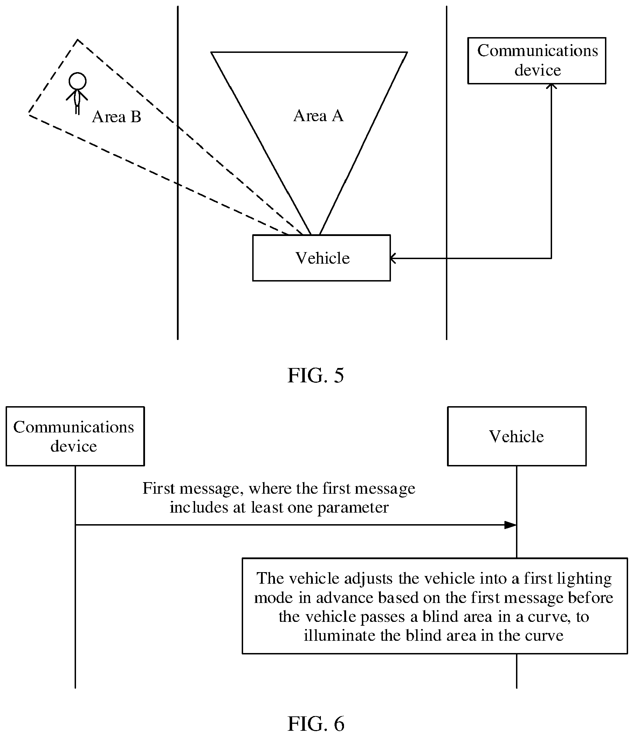

Optionally, the roadside communications device may be installed at a specific location according to a requirement. For example, in the scenario shown in FIG. 1, as shown in FIG. 4, the communications device may be installed beside the curve. For another example, in the scenario shown in FIG. 2, as shown in FIG. 5, the communications device may be installed on a roadside.

According to the vehicle lighting control method provided in embodiments of this application, starting from a situation that a curve lighting system in the conventional technology can be turned on only when being actively triggered by a driver, and consequently a lighting operation is delayed, it is provided that a vehicle automatically adjusts a lighting mode through communication between the roadside communications device and the vehicle in FIG. 3, to illuminate a visual blind area in advance. Embodiments of this application no longer depend on active triggering of the driver. Therefore, a problem of the delayed lighting operation in the conventional technology can be avoided. Embodiments of this application are more than applicable to an illumination scenario of a visual blind area in a curve and are applicable to an illumination scenario similar to the roadside blind area shown in FIG. 2. This greatly improves driving safety.

With reference to specific embodiments, the following describes in detail a process of communication between a vehicle and a roadside communications device in two scenarios in FIG. 4 and FIG. 5.

### Embodiment 1

For the illumination scenario of the visual blind area in the curve shown in FIG. 4, FIG. 6 is a schematic flowchart of Embodiment 1 of a vehicle lighting control method according to an embodiment of this application. As shown in FIG. 6, the vehicle lighting control method provided in this embodiment specifically includes the following steps.

S601: A roadside communications device sends a first message to a vehicle.

The first message includes at least one parameter, and the at least one parameter includes but is not limited to a start point of a curve, a type of a first location at a first time point, a geographical location of the first location, a moving speed at the first location, or a first timing advance.

S602: The vehicle adjusts the vehicle into a first lighting mode in advance based on the first message before the vehicle passes a blind area in the curve, to illuminate the blind area in the curve.

In a possible implementation, the vehicle may determine a first turn-on moment based on the at least one parameter, and the first turn-on moment is advanced by the first timing advance relative to a moment at which the vehicle travels past the blind area in the curve.

It should be noted that, that the vehicle passes a blind area in the curve means that the vehicle arrives at a location closest to the blind area in the curve on a travel path, or arrives at the blind area.

For example, the parameter in the first message is the start point of the curve. A location point of the vehicle when the vehicle receives the first message may be first obtained. Then, a target distance between the vehicle and the start point of the curve when the first message is received is determined based on the location point of the vehicle and the start point of the curve. Then, a target time period is determined based on a vehicle velocity of the vehicle when the first message is received and the target distance. The first turn-on moment may be obtained by adding the target time period to a moment at which the vehicle receives the first message.

In another possible implementation, the vehicle may determine a first turn-on location based on the at least one parameter; and adjust the vehicle into the first lighting mode when the vehicle arrives at the first turn-on location, to illuminate the blind area in the curve.

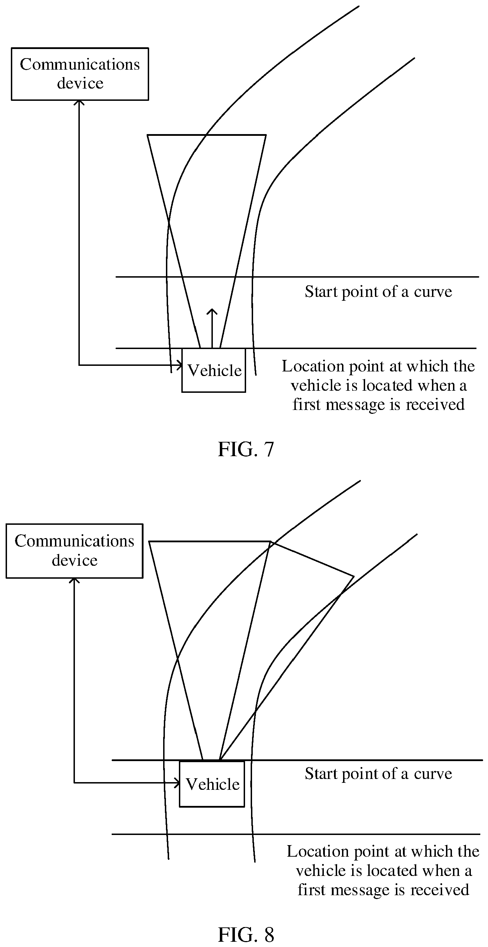

Optionally, as shown in FIG. 7, a start point of a curve may be used as the first turn-on location.

In still another possible implementation, the vehicle may determine a first distance based on the at least one parameter; and adjust the vehicle into the first lighting mode when the vehicle arrives at a location that is the first distance from the blind area in the curve, to illuminate the blind area in the curve.

Optionally, the first distance may be preset. For example, a distance of 100 m relative to the blind area in the curve is defined as the first distance.

The foregoing describes a process of determining an occasion for adjusting a lighting mode of the vehicle in the illumination scenario of the visual blind area in the curve. The following describes an implementation of adjusting the lighting mode of the vehicle.

The vehicle may adjust the vehicle into the first lighting mode based on at least one of a type of a turned-on lamp, a quantity of turned-on lamps, projection light intensity, a projection angle, or a turn-on moment.

Specifically, in a possible implementation, if a supplementary light source such as a corner lamp, a static curve low beam lamp, and/or a matrix headlamp is installed on the vehicle, when the adjustment occasion described above is met, the vehicle may be adjusted into the first lighting mode by enabling a corresponding sub-module of the corner light, the static curve low beam lamp, and/or the matrix headlamp.

Further, usually, supplementary light sources such as corner lamps, static curve low beam lamps, and/or matrix headlamps are symmetrically installed on two sides of the vehicle. In the illumination scenario of the visual blind area in the curve, only a lamp close to the inner side of the curve needs to be turned on to illuminate the visual blind area. For a purpose of enabling the vehicle to turn on only the lamp close to the inner side of the curve to reduce power consumption of the vehicle, the first message sent by the communications device to the vehicle may further include direction information. The direction information may indicate a direction of the curve relative to the vehicle. For example, the direction information may indicate that the curve is on a left side or a right side of the vehicle. After the vehicle receives the first message, when the adjustment occasion described above is met, the vehicle adjusts, based on the direction information, the vehicle into the first lighting mode by turning on a supplementary light source close to the inner side of the curve. This reduces power consumption of the vehicle.

In another possible implementation, when a follow-up lighting system is installed on the vehicle, the first message sent by the communications device to the vehicle may further include a curvature radius and direction information. The curvature radius is a curvature radius at a location on the curve that is a preset distance from the start point of the curve. The direction information may also be used to indicate a direction of the curve relative to the vehicle. After receiving the first message, the vehicle may calculate, based on the curvature radius, an angle that a lamp part in the follow-up lighting system needs to rotate, and when the adjustment occasion described above is met, control the lamp part in the follow-up lighting system to rotate the angle toward a side indicated by the direction information, so as to adjust the vehicle into the first lighting mode to implement lighting of the visual blind area in the curve.

FIG. 8 is a schematic diagram of an effect achieved by using an embodiment of this application in an illumination scenario of a visual blind area in a curve. As shown in FIG. 8, in this embodiment of this application, the vehicle lighting mode can be automatically adjusted without manual intervention of a driver, and the visual blind area in the curve can be illuminated before the vehicle enters the curve. This helps the driver observe a road condition in the visual blind area, and greatly improves safety of driving on the curve.

According to the vehicle lighting control method provided in this embodiment, the roadside communications device sends the first message to the vehicle. The first message includes at least one parameter. After receiving the first message, the vehicle may adjust the vehicle into the first lighting mode in advance based on the at least one parameter before the vehicle passes the blind area in the curve, to illuminate the blind area in the curve. Because an adjustment action in the foregoing method is automatically performed by the vehicle without intervention of the driver, there is no problem of delayed lighting caused due to dependency on active triggering of the driver in the conventional technology. In addition, in this embodiment of this application, illumination is controlled to be enabled at the start point of the curve, so that the driver can observe a road condition in the visual blind area in the curve in advance. This ensures safety of driving the vehicle on the curve.

### Embodiment 2

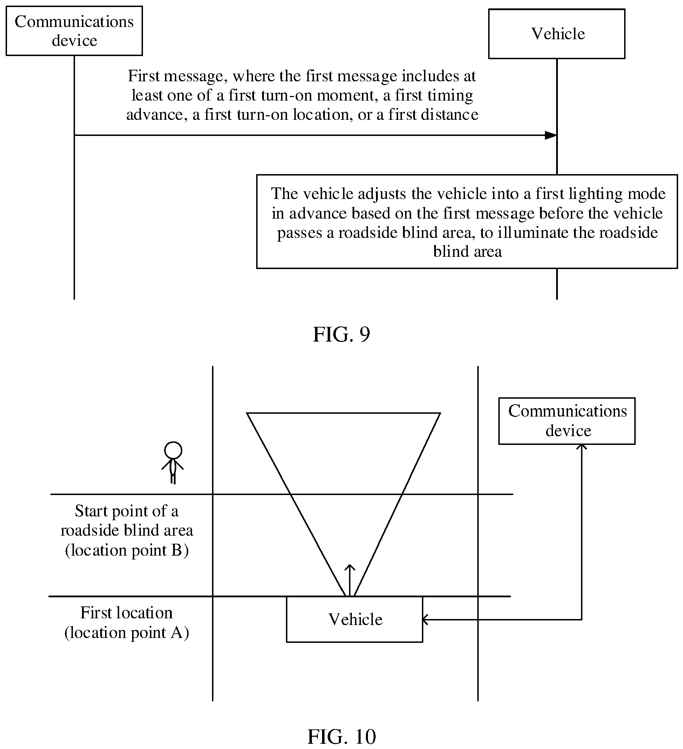

For the illumination scenario of the roadside blind area shown in FIG. 5, FIG. 9 is a schematic flowchart of Embodiment 2 of a vehicle lighting control method according to an embodiment of this application. As shown in FIG. 9, the vehicle lighting control method provided in this embodiment of this application specifically includes the following steps.

S901: A roadside communications device sends a first message to a vehicle.

Optionally, the first message may include at least one of a first turn-on moment, a first timing advance, a first turn-on location, or a first distance. The first turn-on moment is used to indicate the vehicle to adjust the vehicle into a first lighting mode at the first turn-on moment, to illuminate a roadside blind area. The first timing advance is used to indicate the vehicle to adjust the vehicle into the first lighting mode at a moment advanced by the first timing advance relative to a moment at which the vehicle travels past the roadside blind area, to illuminate the roadside blind area. The first turn-on location is used to indicate the vehicle to adjust the vehicle into the first lighting mode when the vehicle arrives at the first turn-on location, to illuminate the roadside blind area. The first distance is used to indicate the vehicle to adjust the vehicle into the first lighting mode when the vehicle arrives at a location that is the first distance from the roadside blind area, to illuminate the roadside blind area.

The following describes a manner of obtaining the first turn-on moment, the first timing advance, the first turn-on location, or the first distance.

In a possible implementation, a first location of the vehicle at a first time point and first motion status data relative to the roadside communications device may be first obtained, and then the first turn-on moment, the first timing advance, the first turn-on location, or the first distance is determined based on the first location and the first motion status data.

Optionally, the roadside communications device may obtain the first location of the vehicle at the first time point and the first motion status data of the vehicle relative to the roadside communications device by using detection technologies such as photographing, radar, laser, and an induction loop. The first motion status data includes but is not limited to a velocity, an acceleration, an angular velocity, or angular acceleration.

The following uses an example in which the first motion status data is a velocity to describe in detail a process of determining the first turn-on moment, the first timing advance, the first turn-on location, and the first distance.

For determining of the first turn-on moment and the first turn-on location, as shown in FIG. 10, assuming that the first location of the vehicle at the first time point that is obtained by the roadside communications device is a location point A, a start point of the roadside blind area is a location point B, and a velocity of the vehicle at the location point A relative to the roadside communications device is v, the roadside communications device may first calculate a distance between the location point A and the location point B, and then duration used by the vehicle to travel from the location point A to the location point B is calculated based on the distance and the velocity v that are obtained through calculation. The first turn-on moment may be obtained by adding the duration to a moment at which the vehicle arrives at the location point A. The start point of the roadside blind area may be used as the first turn-on location.

For determining of the first timing advance, assuming that the first location of the vehicle at the first time point that is obtained by the roadside communications device is a location point A, a location point that is on a road and that is closest to the roadside blind area is a location point B, and a velocity of the vehicle at the location point A relative to the roadside communications device is v, the roadside communications device may first calculate a distance between the location point A and the location point B, and then duration used by the vehicle to travel from the location point A to the location point B is calculated based on the distance and the velocity v that are obtained through calculation. The duration may be used as the first timing advance.

For determining of the first distance, the first distance may be preset. For example, a distance of 100 m relative to the roadside blind area is defined as the first distance.

In another possible implementation, at least one of the first turn-on moment, the first timing advance, the first turn-on location, or the first distance may be determined based on the roadside blind area.

In still another possible implementation, information about a planned navigation path of the vehicle may be first obtained, and then at least one of the first turn-on moment, the first timing advance, the first turn-on location, or the first distance may be determined based on the navigation path information.

Optionally, a manner in which the roadside communications device sends the first message to the vehicle includes but is not limited to an underlying unicast manner, an underlying multicast manner, and/or an encryption manner.

S902: The vehicle adjusts the vehicle into the first lighting mode in advance based on the first message before the vehicle passes the roadside blind area, to illuminate the roadside blind area.

In a possible implementation, after receiving the first message, the vehicle may adjust the vehicle into the first lighting mode at the first turn-on moment, to illuminate the roadside blind area.

In another possible implementation, after receiving the first message, the vehicle may adjust the vehicle into the first lighting mode at the moment advanced by the first timing advance relative to the moment at which the vehicle travels past the roadside blind area, to illuminate the roadside blind area.

In still another possible implementation, after receiving the first message, the vehicle determines, based on location information of the vehicle, whether the vehicle arrives at the first turn-on location, and adjusts the vehicle into the first lighting mode when the vehicle arrives at the first turn-on location, to illuminate the roadside blind area.

In still another possible implementation, after receiving the first message, the vehicle may monitor a distance between the vehicle and the roadside communications device in real time in a manner such as radar, and when the distance between the vehicle and the roadside communications device is the first distance, adjusts the vehicle into the first lighting mode to illuminate the roadside blind area.

Optionally, before the vehicle is adjusted into the first lighting mode in advance to illuminate the roadside blind area, the method provided in this embodiment further includes: determining, based on the first message, that a minimum distance between the roadside blind area and the planned navigation path of the vehicle does not exceed a first threshold, to avoid a problem of high energy consumption caused by illuminating the roadside blind area when the vehicle is so far away from the roadside blind area that the roadside blind area cannot constitute a safety risk to vehicle driving.

The foregoing describes a process of determining an occasion for adjusting a lighting mode of the vehicle in the illumination scenario of the roadside blind area. The following describes a process of adjusting the lighting mode of the vehicle.

In a possible implementation, when the adjustment occasion described above is met, a corresponding sub-module of a high beam lamp and/or a matrix headlamp may be directly turned on to adjust the vehicle into the first lighting mode, to illuminate the roadside blind area.

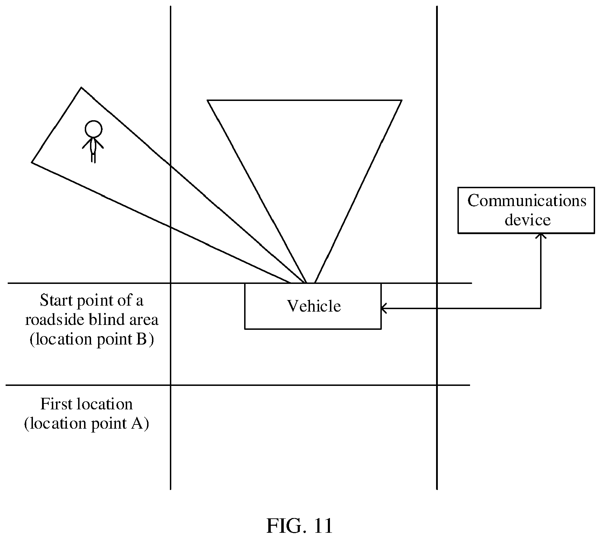

FIG. 11 is a schematic diagram of an effect achieved by using an embodiment of this application in an illumination scenario of a roadside blind area. As shown in FIG. 11, in this embodiment of this application, the vehicle lighting mode can be automatically adjusted without manual intervention of a driver, so that the driver can clearly observe road conditions and pedestrian conditions on two sides of a road. This improves driving safety.

According to the vehicle lighting control method provided in this embodiment, the roadside communications device sends the first message to the vehicle. The first message includes at least one of the first turn-on moment, the first timing advance, the first turn-on location, or the first distance. After receiving the first message, and before passing the roadside blind area, the vehicle adjusts the vehicle into the first lighting mode in advance to illuminate the roadside blind area. An action of adjusting the lighting mode in the foregoing method is automatically performed by the vehicle without intervention of the driver, so that the driver can clearly observe road conditions and pedestrian conditions on two sides of the road in advance. This improves driving safety.

### Embodiment 3

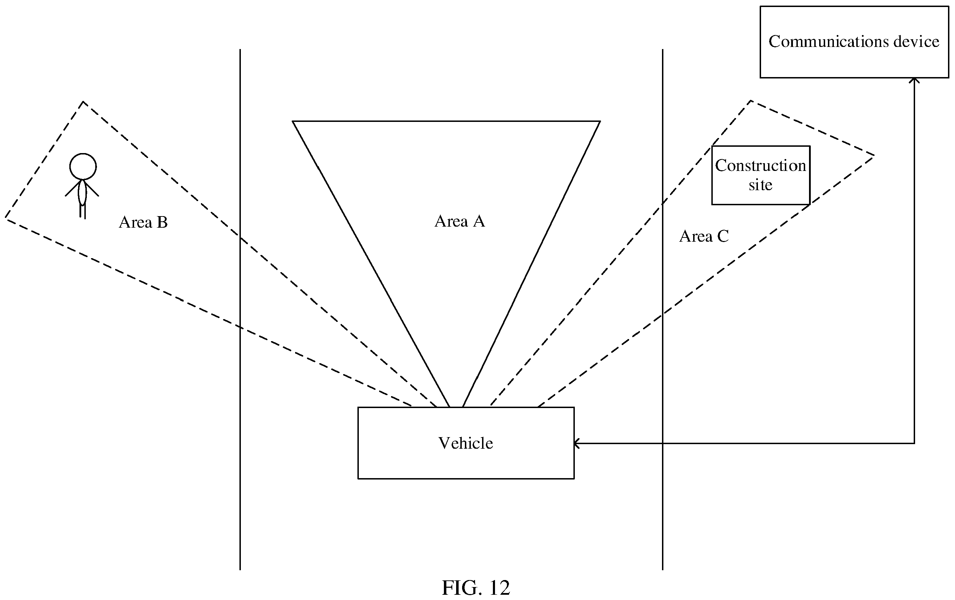

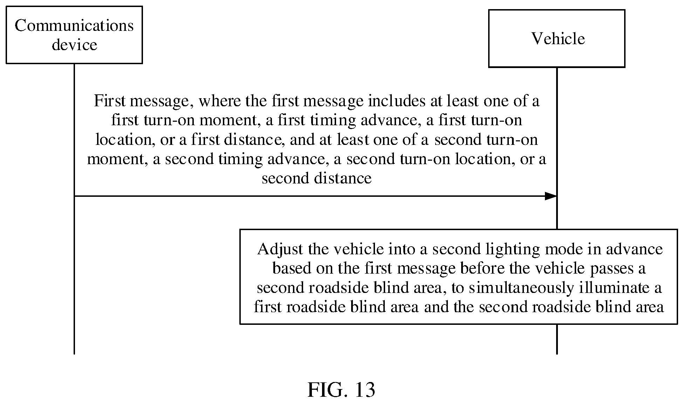

For the illumination scenarios shown in FIG. 4 and FIG. 5, there may be a plurality of blind areas that need to be simultaneously illuminated. FIG. 12 shows an example in which there are two roadside blind areas: an area B and an area C on two roadsides. For a purpose of simultaneously illuminating the plurality of blind areas, FIG. 13 is a schematic flowchart of Embodiment 3 of a vehicle lighting control method according to an embodiment of this application. The vehicle lighting control method provided in this embodiment includes the following steps.

S1301: A roadside communications device sends a first message to a vehicle.

Based on the foregoing embodiment, the first message is further used to prompt the vehicle to illuminate a second roadside blind area, and the second roadside blind area is also near a travel path that the vehicle is to pass through. For ease of description, the roadside blind area in the foregoing embodiment is referred to as a first roadside blind area.

Specifically, based on the foregoing embodiment, the first message further includes at least one of a second turn-on moment, a second timing advance, a second turn-on location, or a second distance.

The second turn-on moment is used to indicate the vehicle to adjust the vehicle into a second lighting mode at the second turn-on moment, to simultaneously illuminate the first roadside blind area and the second roadside blind area. The second timing advance is used to indicate the vehicle to adjust the vehicle into the second lighting mode at a moment advanced by the second timing advance relative to a moment at which the vehicle travels past the second roadside blind area, to simultaneously illuminate the first roadside blind area and the second roadside blind area. The second turn-on location is used to indicate the vehicle to adjust the vehicle into the second lighting mode when the vehicle arrives at the second turn-on location, to simultaneously illuminate the first roadside blind area and the second roadside blind area. The second distance is used to indicate the vehicle to adjust the vehicle into the second lighting mode when the vehicle arrives at a location that is the second distance from the second roadside blind area, to simultaneously illuminate the first roadside blind area and the second roadside blind area.

For a manner of obtaining the second turn-on moment, the second timing advance, the second turn-on location, or the second distance, refer to the foregoing embodiments. Details are not described again in this application.

S1302: The vehicle adjusts the vehicle into the second lighting mode in advance based on the first message before the vehicle passes the second roadside blind area, to simultaneously illuminate the first roadside blind area and the second roadside blind area.

In a possible implementation, after receiving the first message, the vehicle may adjust the vehicle into the second lighting mode at the second turn-on moment, to illuminate the first roadside blind area and the second roadside blind area.

In another possible implementation, after receiving the first message, the vehicle may adjust the vehicle into the second lighting mode at the moment advanced by the second timing advance relative to the moment at which the vehicle travels past the roadside blind area, to illuminate the first roadside blind area and the second roadside blind area.

In still another possible implementation, after receiving the first message, the vehicle determines, based on location information of the vehicle, whether the vehicle arrives at the second turn-on location, and adjusts the vehicle into the second lighting mode when the vehicle arrives at the second turn-on location, to illuminate the first roadside blind area and the second roadside blind area.

In still another possible implementation, after receiving the first message, the vehicle may monitor a distance between the vehicle and the roadside communications device in real time in a manner such as radar, and when the distance between the vehicle and the roadside communications device is the second distance, adjusts the vehicle into the second lighting mode to illuminate the first roadside blind area and the second roadside blind area.

The foregoing describes a process of determining an occasion for adjusting a lighting mode of the vehicle in the illumination scenario of the roadside blind area. The following describes a process of adjusting the lighting mode of the vehicle.

In a possible implementation, when the adjustment occasion described above is met, a corresponding sub-module of a high beam lamp and/or a matrix headlamp may be directly turned on to adjust the vehicle into the second lighting mode, to illuminate the first roadside blind area and the second roadside blind area.

Optionally, to implement simultaneous illumination for the area B and the area C in FIG. 12, S1301 and S 1302 may be replaced with the following manner:

The second roadside communications device sends a second message to the vehicle. The second message is used to prompt the vehicle to illuminate the second roadside blind area, and the second roadside blind area is near the travel path that the vehicle is to pass through. The vehicle adjusts the vehicle into the second lighting mode based on the second message before the vehicle passes the second roadside blind area, to simultaneously illuminate the first roadside blind area and the second roadside blind area.

A process in which the vehicle adjusts the vehicle into the second lighting mode in advance based on the second message is similar to a process in which the vehicle adjusts the vehicle into the first lighting mode in advance based on the first message in the foregoing embodiment. Details are not described herein again in this application.

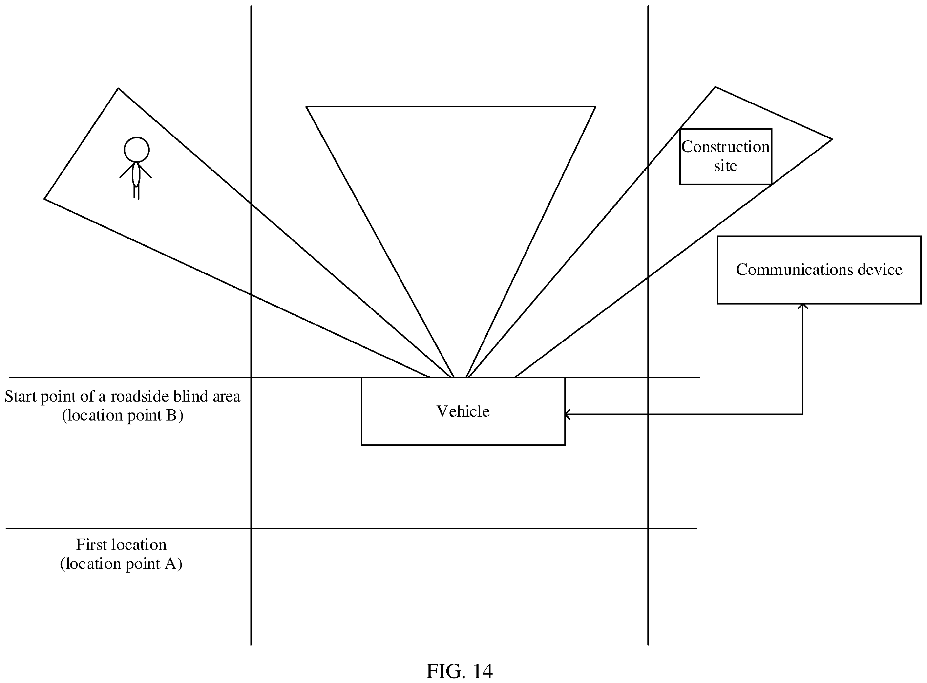

FIG. 14 is a schematic diagram of an effect achieved by using an embodiment of this application in an illumination scenario of a roadside blind area. As shown in FIG. 14, in this embodiment of this application, the plurality of roadside blind areas can be simultaneously illuminated, so that a driver can clearly observe all areas having safety risks on a road. This further improves driving safety.

According to the vehicle lighting control method provided in this embodiment, the first message carries at least one of the second turn-on moment, the second timing advance, the second turn-on location, or the second distance, so that the vehicle can adjust the vehicle into the second lighting mode in advance before passing the second roadside blind area, to simultaneously illuminate the first roadside blind area and the second roadside blind area. In this way, the plurality of roadside blind areas are simultaneously illuminated, and the driver can clearly observe all areas having safety risks on the road. This further improves driving safety.

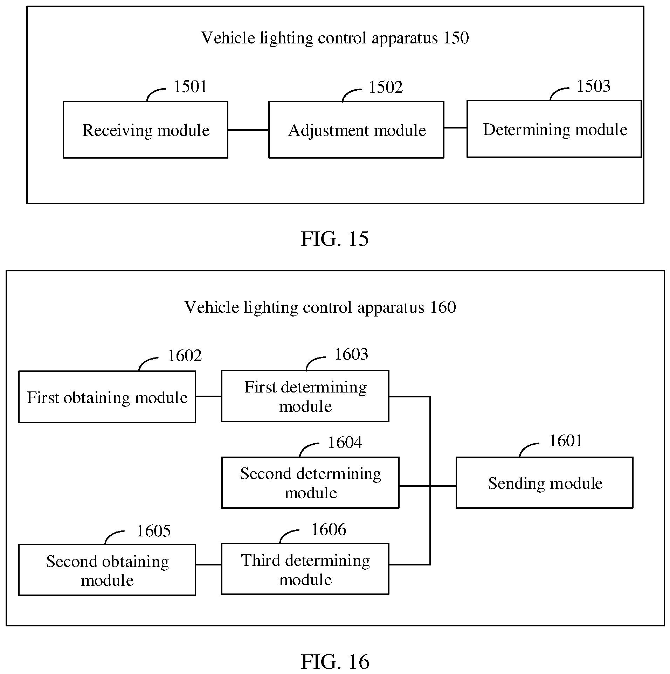

FIG. 15 is a schematic diagram of a structure of an embodiment of a vehicle lighting control apparatus 150 according to an embodiment of this application. An entity corresponding to the vehicle lighting control apparatus 150 includes but is not limited to a device that can implement a corresponding function, such as a control component in the vehicle described above, a lighting system in the vehicle, a mobile terminal in the vehicle, and the vehicle. As shown in FIG. 15, the vehicle lighting control apparatus 150 provided in this embodiment of this application includes a receiving module 1501 and an adjustment module 1502.

The receiving module 1501 is configured to receive a first message sent by a first roadside communications device. The first message is used to prompt the vehicle to illuminate a first target, and the first target is near a travel path that the vehicle is to pass through.

The adjustment module 1502 is configured to adjust the vehicle into a first lighting mode in advance based on the first message before the vehicle passes the first target, to illuminate the first target.

For a specific implementation process, refer to step S602 or step S902 in the foregoing method embodiments.

Optionally, the first message includes at least one parameter, and the adjustment module 1502 may be specifically configured to: determine a first turn-on moment based on the at least one parameter, where the first turn-on moment is advanced by a first timing advance relative to a moment at which the vehicle travels past the first target; and adjust the vehicle into the first lighting mode at the first turn-on moment.

Optionally, the first message includes at least one parameter, and the adjustment module 1502 may be specifically configured to: determine a first turn-on location based on the at least one parameter; and adjust the vehicle into the first lighting mode when the vehicle arrives at the first turn-on location, to illuminate the first target.

Optionally, the first message includes at least one parameter, and the adjustment module 1502 may be specifically configured to: determine a first distance based on the at least one parameter; and adjust the vehicle into the first lighting mode when the vehicle arrives at a location that is the first distance from the first target, to illuminate the first target.

Optionally, the first message includes a first turn-on moment, and the adjustment module 1502 is specifically configured to adjust the vehicle into the first lighting mode at the first turn-on moment.

Optionally, the first message includes a first turn-on location, and the adjustment module 1502 is specifically configured to adjust the vehicle into the first lighting mode when the vehicle arrives at the first turn-on location, to illuminate the first target.

Optionally, the first message includes a first distance, and the adjustment module 1502 is specifically configured to adjust the vehicle into the first lighting mode when the vehicle arrives at a location that is the first distance from the first target, to illuminate the first target.

Optionally, the adjustment module 1502 is configured to adjust at least one of a type of a turned-on lamp, a quantity of turned-on lamps, projection light intensity, a projection angle, or a turn-on moment.

Optionally, the vehicle lighting control apparatus 150 provided in this embodiment further includes a determining module 1503, configured to determine, based on the first message, that a minimum distance between the first target and a planned navigation path of the vehicle does not exceed a first threshold.

Optionally, the receiving module 1501 is further configured to receive a second message sent by a second roadside communications device. The second message is used to prompt the vehicle to illuminate a second target, and the second target is near the travel path that the vehicle is to pass through. The adjustment module 1502 is further configured to adjust the vehicle into a second lighting mode in advance based on the second message before the vehicle passes the second target, to simultaneously illuminate the first target and the second target.

Optionally, the first message is further used to prompt the vehicle to illuminate a second target, and the second target is near the travel path that the vehicle is to pass through. The adjustment module 1502 is further configured to adjust the vehicle into a second lighting mode in advance based on the first message before the vehicle passes the second target, to simultaneously illuminate the first target and the second target.

The vehicle lighting control apparatus provided in this embodiment of this application may perform the steps on the vehicle side in any one of the foregoing method embodiments. Implementation principles and beneficial effects thereof are similar, and details are not described herein again.

FIG. 16 is a schematic diagram of a structure of an embodiment of a vehicle lighting control apparatus 160 according to an embodiment of this application. An entity corresponding to the vehicle lighting control apparatus 130 include but is not limited to the foregoing base station, micro base station, mobile micro base station, mobile phone, tablet computer, notebook computer, smartwatch, and another device that can implement a corresponding function. As shown in FIG. 16, the vehicle lighting control apparatus 160 provided in this embodiment of this application includes a sending module 1601. The sending module 1601 is configured to send a first message to a vehicle. The first message is used to prompt the vehicle to illuminate a first target, and the first target is near a travel path that the vehicle is to pass through. The first message includes at least one of a first turn-on moment, a first timing advance, a first turn-on location, or a first distance. The first turn-on moment is used to indicate the vehicle to adjust the vehicle into a first lighting mode at the first turn-on moment, to illuminate the first target. The first timing advance is used to indicate the vehicle to adjust the vehicle into the first lighting mode at a moment advanced by the first timing advance relative to a moment at which the vehicle travels past the first target, to illuminate the first target. The first turn-on location is used to indicate to the vehicle to adjust the vehicle into the first lighting mode when the vehicle arrives at the first turn-on location, to illuminate the first target. The first distance is used to indicate to the vehicle to adjust the vehicle into the first lighting mode when the vehicle arrives at a location that is the first distance from the first target, to illuminate the first target.

For a specific implementation process, refer to S601 or S901 in the foregoing method embodiments.

Optionally, the vehicle lighting control apparatus 160 provided in this embodiment further includes: a first obtaining module 1602, configured to obtain a first location of the vehicle at a first time point and first motion status data relative to a roadside communications device; and a first determining module 1603, configured to determine at least one of the first turn-on moment, the first timing advance, the first turn-on location, or the first distance based on the first location and the first motion status data.

Optionally, the vehicle lighting control apparatus 160 provided in this embodiment further includes a second determining module 1604, configured to determine at least one of the first turn-on moment, the first timing advance, the first turn-on location, or the first distance based on the first target.

Optionally, the vehicle lighting control apparatus 160 provided in this embodiment further includes: a second obtaining module 1605, configured to obtain information about a planned navigation path of the vehicle; a third determining module 1606, configured to determine at least one of the first turn-on moment, the first timing advance, the first turn-on location, or the first distance based on the navigation path information.

Optionally, the first message is further used to prompt the vehicle to illuminate a second target, and the second target is near the travel path that the vehicle is to pass through. The first message further includes at least one of a second turn-on moment, a second timing advance, a second turn-on location, or a second distance. The second turn-on moment is used to indicate the vehicle to adjust the vehicle into a second lighting mode at the second turn-on moment, to simultaneously illuminate the first target and the second target. The second timing advance is used to indicate the vehicle to adjust the vehicle into the second lighting mode at a moment advanced by the second timing advance relative to a moment at which the vehicle travels past the second target, to simultaneously illuminate the first target and the second target. The second turn-on location is used to indicate to the vehicle to adjust the vehicle into the second lighting mode when the vehicle arrives at the second turn-on location, to simultaneously illuminate the first target and the second target. The second distance is used to indicate to the vehicle to adjust the vehicle into the second lighting mode when the vehicle arrives at a location that is the second distance from the second target, to simultaneously illuminate the first target and the second target.

The vehicle lighting control apparatus provided in this embodiment of this application may perform the steps on the roadside communications device side in any one of the foregoing method embodiments. Implementation principles and beneficial effects thereof are similar, and details are not described herein again.

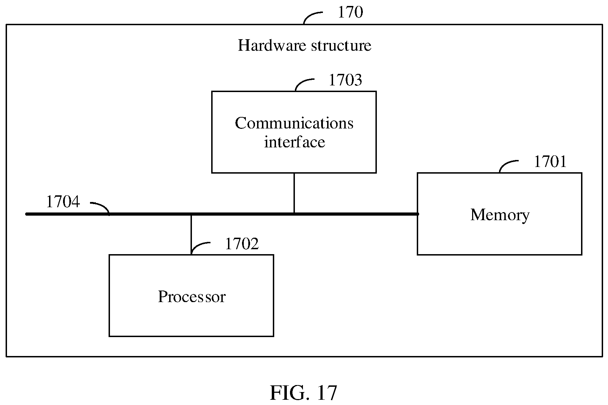

FIG. 17 is a schematic diagram of a hardware structure 170 according to an embodiment of this application. The hardware structure may be a hardware structure in a vehicle, or may be a hardware structure in a roadside communications device. As shown in FIG. 17, the hardware structure 170 includes a memory 1701 and a processor 1702. The memory 1701 is configured to store program instructions, and the processor 1702 is configured to invoke the program instructions in the memory 1701 to perform the steps on the vehicle side or the steps on the roadside communications device side in the foregoing method embodiments. Implementation principles and technical effects thereof are similar, and details are not described herein again.

Optionally, the terminal device further includes a communications interface 1703, and the communications interface 1703 may be connected to the processor 1702 by using a bus 1704. The processor 1702 may control the communications interface 1703 to implement receiving and sending functions of the hardware structure 170.

This application further provides a readable storage medium. The readable storage medium stores executable instructions. When executing the executable instructions, at least one processor of a terminal device implements the steps on the vehicle side or the steps on the roadside communications device side in the foregoing method embodiments. Implementation principles and technical effects thereof are similar, and details are not described herein again.

This application further provides a program product. The program product includes computer programs (namely, executable instructions). The computer programs are stored in a readable storage medium. The processor may read the computer programs from the readable storage medium, and the processor executes the computer programs to perform the steps on the vehicle side or the steps on the roadside communications device side in the foregoing method embodiments. Implementation principles and beneficial effects thereof are similar, and details are not described herein again.

In the several embodiments provided in this application, it should be understood that the disclosed device and method may be implemented in other manners. For example, the described apparatus embodiment is merely an example. For example, division into modules is merely logical function division. During actual implementation, there may be another division manner. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical units, and may be located in one position, or may be distributed on a plurality of network units. Some or all of the modules may be selected according to actual requirements to achieve the objectives of the solutions in embodiments of this application.

In addition, function modules in embodiments of this application may be integrated into one processing unit, or each of the modules may exist alone physically, or two or more modules are integrated into one unit. The unit integrated by the modules may be implemented in a form of hardware, or may be implemented in a form of hardware plus a software function unit.

When the foregoing integrated module is implemented in a form of a software function module, the integrated unit may be stored in a computer-readable storage medium. The software function module is stored in a storage medium and includes several instructions to enable a computer device (which may be a personal computer, a server, or a network device) or a processor (English: processor) to perform some steps of the methods in embodiments of this application.

It should be understood that the processor may be a central processing unit (central processing unit, CPU), or may be another general-purpose processor, a digital signal processor (digital signal processor, DSP), an application-specific integrated circuit (application-specific integrated circuit, ASIC), or the like. The general-purpose processor may be a microprocessor, or the processor may be any conventional processor or the like. The steps of the method disclosed with reference to this application may be directly performed by a hardware processor, or may be performed by a combination of hardware and a software module in a processor.

The memory may include a high-speed RAM memory, or may include a non-volatile memory NVM such as at least one magnetic disk memory, or may include a USB flash drive, a removable hard disk, a read-only memory, a magnetic disk, an optical disc, or the like.

The bus may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, the bus in the accompanying drawings of this application is not limited to only one bus or only one type of bus.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle lighting control method, wherein the method is applied to a vehicle and comprises:
receiving a first message sent by a first roadside communications device, wherein the first message is used to prompt the vehicle to illuminate a first target, and the first target is near a travel path that the vehicle is to pass through; and
adjusting the vehicle into a first lighting mode in advance based on the first message before the vehicle passes the first target, to illuminate the first target.

2. The method according to claim 1, wherein the first message comprises at least one parameter, and the adjusting the vehicle into a first lighting mode in advance based on the first message before the vehicle passes the first target, to illuminate the first target comprises:
determining a first turn-on moment based on the at least one parameter, wherein the first turn-on moment is advanced by a first timing advance relative to a moment at which the vehicle travels past the first target; and
adjusting the vehicle into the first lighting mode at the first turn-on moment.

3. The method according to claim 1, wherein the first message comprises at least one parameter, and the adjusting the vehicle into a first lighting mode in advance based on the first message before the vehicle passes the first target, to illuminate the first target comprises:
determining a first turn-on location based on the at least one parameter; and
adjusting the vehicle into the first lighting mode when the vehicle arrives at the first turn-on location, to illuminate the first target.

4. The method according to claim 1, wherein the first message comprises at least one parameter, and the adjusting the vehicle into a first lighting mode in advance based on the first message before the vehicle passes the first target, to illuminate the first target comprises:
determining a first distance based on the at least one parameter; and
adjusting the vehicle into the first lighting mode when the vehicle arrives at a location that is the first distance from the first target, to illuminate the first target.

5. The method according to claim 1, wherein the first message comprises a first turn-on moment, and the adjusting the vehicle into a first lighting mode in advance based on the first message before the vehicle passes the first target, to illuminate the first target comprises: adjusting the vehicle into the first lighting mode at the first turn-on moment.

6. The method according to claim 1, wherein the first message comprises a first turn-on location, and the adjusting the vehicle into a first lighting mode in advance based on the first message before the vehicle passes the first target, to illuminate the first target comprises: adjusting the vehicle into the first lighting mode when the vehicle arrives at the first turn-on location, to illuminate the first target.

7. The method according to claim 1, wherein the first message comprises a first distance, and the adjusting the vehicle into a first lighting mode in advance based on the first message before the vehicle passes the first target, to illuminate the first target comprises: adjusting the vehicle into the first lighting mode when the vehicle arrives at a location that is the first distance from the first target, to illuminate the first target.

8. The method according to any one of claims 1 to 7, wherein the adjusting the vehicle into a first lighting mode comprises: adjusting at least one of a type of a turned-on lamp, a quantity of turned-on lamps, projection light intensity, a projection angle, or a turn-on moment.

9. The method according to any one of claims 1 to 8, wherein before the adjusting the vehicle into a first lighting mode in advance to illuminate the first target, the method further comprises:
determining, based on the first message, that a minimum distance between the first target and a planned navigation path of the vehicle does not exceed a first threshold.

10. The method according to any one of claims 1 to 9, wherein the method further comprises:
receiving a second message sent by a second roadside communications device, wherein the second message is used to prompt the vehicle to illuminate a second target, and the second target is near the travel path that the vehicle is to pass through; and
adjusting the vehicle into a second lighting mode in advance based on the second message before the vehicle passes the second target, to simultaneously illuminate the first target and the second target.

11. The method according to any one of claims 1 to 9, wherein the first message is further used to prompt the vehicle to illuminate a second target, and the second target is near the travel path that the vehicle is to pass through; and
the vehicle is adjusted into a second lighting mode in advance based on the first message before the vehicle passes the second target, to simultaneously illuminate the first target and the second target.

12. A vehicle lighting control method, wherein the method is applied to a roadside communications device and comprises:
sending a first message to a vehicle, wherein the first message is used to prompt the vehicle to illuminate a first target, and the first target is near a travel path that the vehicle is to pass through, wherein
the first message comprises at least one of a first turn-on moment, a first timing advance, a first turn-on location, or a first distance;
the first turn-on moment is used to indicate the vehicle to adjust the vehicle into a first lighting mode at the first turn-on moment, to illuminate the first target;
the first timing advance is used to indicate the vehicle to adjust the vehicle into the first lighting mode at a moment advanced by the first timing advance relative to a moment at which the vehicle travels past the first target, to illuminate the first target;
the first turn-on location is used to indicate the vehicle to adjust the vehicle into the first lighting mode when the vehicle arrives at the first turn-on location, to illuminate the first target; and
the first distance is used to indicate the vehicle to adjust the vehicle into the first lighting mode when the vehicle arrives at a location that is the first distance from the first target, to illuminate the first target.

13. The method according to claim 12, wherein before the sending a first message to a vehicle, the method further comprises:
obtaining a first location of the vehicle at a first time point and first motion status data relative to the roadside communications device; and
determining at least one of the first turn-on moment, the first timing advance, the first turn-on location, or the first distance based on the first location and the first motion status data.

14. The method according to claim 12, wherein before the sending a first message to a vehicle, the method further comprises:
determining at least one of the first turn-on moment, the first timing advance, the first turn-on location, or the first distance based on the first target.

15. The method according to claim 12, wherein before the sending a first message to a vehicle, the method further comprises:
obtaining information about a planned navigation path of the vehicle; and
determining at least one of the first turn-on moment, the first timing advance, the first turn-on location, or the first distance based on the navigation path information.

16. The method according to any one of claims 12 to 15, wherein the first message is further used to prompt the vehicle to illuminate a second target, and the second target is near the travel path that the vehicle is to pass through;
the first message further comprises at least one of a second turn-on moment, a second timing advance, a second turn-on location, or a second distance;
the second turn-on moment is used to indicate the vehicle to adjust the vehicle into a second lighting mode at the second turn-on moment, to simultaneously illuminate the first target and the second target;
the second timing advance is used to indicate the vehicle to adjust the vehicle into the second lighting mode at a moment advanced by the second timing advance relative to a moment at which the vehicle travels past the second target, to simultaneously illuminate the first target and the second target;
the second turn-on location is used to indicate the vehicle to adjust the vehicle into the second lighting mode when the vehicle arrives at the second turn-on location, to simultaneously illuminate the first target and the second target; and
the second distance is used to indicate the vehicle to adjust the vehicle into the second lighting mode when the vehicle arrives at a location that is the second distance from the second target, to simultaneously illuminate the first target and the second target.

17. A vehicle lighting control apparatus, wherein the apparatus is used in a vehicle and comprises:
a receiving module, configured to receive a first message sent by a first roadside communications device, wherein the first message is used to prompt the vehicle to illuminate a first target, and the first target is near a travel path that the vehicle is to pass through; and
an adjustment module, configured to adjust the vehicle into a first lighting mode in advance based on the first message before the vehicle passes the first target, to illuminate the first target.

18. The apparatus according to claim 17, wherein the first message comprises at least one parameter, and the adjustment module is specifically configured to:
determine a first turn-on moment based on the at least one parameter, wherein the first turn-on moment is advanced by a first timing advance relative to a moment at which the vehicle travels past the first target; and
adjust the vehicle into the first lighting mode at the first turn-on moment.

19. The apparatus according to claim 17, wherein the first message comprises at least one parameter, and the adjustment module is specifically configured to:
determine a first turn-on location based on the at least one parameter; and
adjust the vehicle into the first lighting mode when the vehicle arrives at the first turn-on location, to illuminate the first target.

20. The apparatus according to claim 17, wherein the first message comprises at least one parameter, and the adjustment module is specifically configured to:
determine a first distance based on the at least one parameter; and
adjust the vehicle into the first lighting mode when the vehicle arrives at a location that is the first distance from the first target, to illuminate the first target.

21. The apparatus according to claim 17, wherein the first message comprises a first turn-on moment, and the adjustment module is specifically configured to:
adjust the vehicle into the first lighting mode at the first turn-on moment.

22. The apparatus according to claim 17, wherein the first message comprises a first turn-on location, and the adjustment module is specifically configured to:
adjust the vehicle into the first lighting mode when the vehicle arrives at the first turn-on location, to illuminate the first target.

23. The apparatus according to claim 17, wherein the first message comprises a first distance, and the adjustment module is specifically configured to:
adjust the vehicle into the first lighting mode when the vehicle arrives at a location that is the first distance from the first target, to illuminate the first target.

24. The apparatus according to any one of claims 17 to 23, wherein the adjustment module is specifically configured to:
adjust at least one of a type of a turned-on lamp, a quantity of turned-on lamps, projection light intensity, a projection angle, or a turn-on moment.

25. The apparatus according to any one of claims 17 to 24, wherein the apparatus further comprises:
a determining module, configured to determine, based on the first message, that a minimum distance between the first target and a planned navigation path of the vehicle does not exceed a first threshold.

26. The apparatus according to any one of claims 17 to 25, wherein
the receiving module is further configured to receive a second message sent by a second roadside communications device, wherein the second message is used to prompt the vehicle to illuminate a second target, and the second target is near the travel path that the vehicle is to pass through; and
the adjustment module is further configured to adjust the vehicle into a second lighting mode in advance based on the second message before the vehicle passes the second target, to simultaneously illuminate the first target and the second target.

27. The apparatus according to any one of claims 17 to 25, wherein the first message is further used to prompt the vehicle to illuminate a second target, and the second target is near the travel path that the vehicle is to pass through; and
the adjustment module is further configured to adjust the vehicle into a second lighting mode in advance based on the first message before the vehicle passes the second target, to simultaneously illuminate the first target and the second target.

28. A vehicle lighting control apparatus, wherein the apparatus is used in a roadside communications device and comprises:
a sending module, configured to send a first message to a vehicle, wherein the first message is used to prompt the vehicle to illuminate a first target, and the first target is near a travel path that the vehicle is to pass through, wherein
the first message comprises at least one of a first turn-on moment, a first timing advance, a first turn-on location, or a first distance;
the first turn-on moment is used to indicate the vehicle to adjust the vehicle into a first lighting mode at the first turn-on moment, to illuminate the first target;
the first timing advance is used to indicate the vehicle to adjust the vehicle into the first lighting mode at a moment advanced by the first timing advance relative to a moment at which the vehicle travels past the first target, to illuminate the first target;
the first turn-on location is used to indicate the vehicle to adjust the vehicle into the first lighting mode when the vehicle arrives at the first turn-on location, to illuminate the first target; and
the first distance is used to indicate the vehicle to adjust the vehicle into the first lighting mode when the vehicle arrives at a location that is the first distance from the first target, to illuminate the first target.

29. The apparatus according to claim 28, wherein the apparatus further comprises:
a first obtaining module, configured to obtain a first location of the vehicle at a first time point and first motion status data relative to the roadside communications device; and
a first determining module, configured to determine at least one of the first turn-on moment, the first timing advance, the first turn-on location, or the first distance based on the first location and the first motion status data.

30. The apparatus according to claim 28, wherein the apparatus further comprises:
a second determining module, configured to determine at least one of the first turn-on moment, the first timing advance, the first turn-on location, or the first distance based on the first target.

31. The apparatus according to claim 28, wherein the apparatus further comprises:
a second obtaining module, configured to obtain information about a planned navigation path of the vehicle; and
a third determining module, configured to determine at least one of the first turn-on moment, the first timing advance, the first turn-on location, or the first distance based on the navigation path information.

32. The apparatus according to any one of claims 28 to 31, wherein the first message is further used to prompt the vehicle to illuminate a second target, and the second target is near the travel path that the vehicle is to pass through;
the first message further comprises at least one of a second turn-on moment, a second timing advance, a second turn-on location, or a second distance;
the second turn-on moment is used to indicate the vehicle to adjust the vehicle into a second lighting mode at the second turn-on moment, to simultaneously illuminate the first target and the second target;
the second timing advance is used to indicate the vehicle to adjust the vehicle into the second lighting mode at a moment advanced by the second timing advance relative to a moment at which the vehicle travels past the second target, to simultaneously illuminate the first target and the second target;
the second turn-on location is used to indicate the vehicle to adjust the vehicle into the second lighting mode when the vehicle arrives at the second turn-on location, to simultaneously illuminate the first target and the second target; and
the second distance is used to indicate the vehicle to adjust the vehicle into the second lighting mode when the vehicle arrives at a location that is the second distance from the second target, to simultaneously illuminate the first target and the second target.

33. A vehicle lighting control apparatus, wherein the apparatus is used in a vehicle and comprises a memory and a processor, wherein
the memory is configured to store program instructions, and the processor is configured to invoke the program instructions in the memory to perform the method according to any one of claims 1 to 11.

34. A vehicle lighting control apparatus, wherein the apparatus is used in a roadside communications device and comprises a memory and a processor, wherein
the memory is configured to store program instructions, and the processor is configured to invoke the program instructions in the memory to perform the method according to any one of claims 12 to 16.

35. A computer-readable storage medium, wherein the computer-readable storage medium stores a computer program, and when the computer program is executed, the method according to any one of claims 1 to 11 or the method according to any one of claims 12 to 16 is implemented.

36. A computer program product, wherein when the computer program product is run on a processor, the method according to any one of claims 1 to 11 or the method according to any one of claims 12 to 16 is implemented.
